# EUROPÄISCHE PATENTSCHRIFT

(11) **EP 0 758 588 B1**
(45) Veröffentlichungstag und Bekanntmachung des Hinweises auf die Patenterteilung: **11.11.1998**
(21) Anmeldenummer: 96109832.4
(22) Anmeldetag: 19.06.1996
(51) Int. Cl.: B60J 7/22, B60J 7/08

(54) **Windleitkörper für ein zweisitziges Cabriolet**
Wind deflector for a two-seater convertible vehicle
Déflecteur de vent pour voiture convertible à deux places

(30) Priorität: 14.08.1995 DE 19529882
(43) Veröffentlichungstag der Anmeldung: 19.02.1997
(73) Patentinhaber: DAIMLER-BENZ AKTIENGESELLSCHAFT, 70567 Stuttgart (DE)
(72) Erfinder: Kuttner, Hans-Peter, 71093 Weil im Schönbuch (DE); Wacker, Uwe, 71101 Schönaich (DE); Müller, Peter, 71065 Sindelfingen (DE)

(56) Entgegenhaltungen:
- DE-A- 4 239 428
- DE-C- 3 929 831
- DE-C- 4 037 705

## Beschreibung

Die Erfindung betrifft einen Windleitkörper für ein zweisitziges Cabriolet gemäß dem Oberbegriff des Anspruchs 1.

Vom Cabriolet SLK der Fa. Mercedes-Benz (interne Bezeichnung R 170), wie es in der Zeitschrift mot, Heft 16/1995 gezeigt ist, ist es bekannt, eine Karosserie hinter den Fahrzeugsitzen mit zwei höckerförmigen Windleitkörpern zu versehen, die vorne mit einem großen Umfang ausgebildet, sich zum Fahrzeugheck hin verjüngen. Die im Fahrbetrieb durch die Windschutzscheibe angehobene und durch die Druckverhältnisse wieder nach unten gedrückte und vom Fahrzeugheck her einfallende Luftströmung wird durch diese Windleitkörper wieder nach vorne und oben gelenkt, wobei die vorne aufragende Fläche der Windleitkörper annähernd bis auf Höhe der davorliegenden Kopfstützenoberkante reicht und damit den Luftstrom über die Kopfstütze hinwegführt, wodurch ein den Sitz besetzender Insasse von diesem Luftstrom und den Luftverwirbelungen verschont bleibt. Die Windleitkörper sind einteilig an die heckseitige Fahrzeugkarosserie angeformt, weshalb ein hoher Fertigungsaufwand entsteht. Außerdem erschweren bzw. nehmen diese Windleitkörper die Verschiebemöglichkeit für ein vollautomatisch im Kofferraum zu versenkendes Fahrzeugdach.

Aus der DE 40 37 705 C1 ist eine Windleiteinrichtung für einen Kraftwagen zu entnehmen, dessen eine waagerecht liegende Windschottplatte hinter jedem Sitz nach oben aufgewölbt ist, wodurch die von hinten anströmende Luft ein Stück weit nach vorne oben geleitet wird, wo sich eine weitere, aufgerichtete Windschottplatte anschließt, die den Luftstrom über die Kopfstützen hinweglenkt. Um die anströmende Luft ausreichend umzulenken, werden somit zwei einander zugeordnete Windschottplatten benötigt, die, sollten sie entfernt werden, aufgrund ihrer Breite viel Stauraum belegen.

Die Aufgabe der Erfindung besteht darin, für einen gattungsgemäßen, haubenförmig aufragenden Windleitkörper die Verwendungsmöglichkeit bei zweisitzigen Cabriolets zu verbessern.

Der sich nach vorne im Umfang erweiternde Windleitkörper leitet die Luftströmung nach vorne und über die Kopfstützen der Fahrzeugsitze hinweg, ohne daß ein Insassen von dieser Luftströmung unangenehm getroffen wird. Die vorne hochragende Fläche des Windleitkörpers muß dabei mindestens so breit und hoch sein, daß eine davorliegende Kopfstütze innerhalb der Umströmungslinie des Windleitkörpers liegt. Günstig ist es zudem, wenn der Luftstrom durch den Windleitkörper auch noch bis über die Windschutzscheibe gelenkt wird.

Damit der Windleitkörper den Platz auf der Fahrzeugkarosserie hinter den Sitzen nicht vollständig blockiert, und z.B. nicht im Bewegungsablauf eines automatisch in den Kofferraum versenkbaren Fahrzeugdaches liegt, ist jeder Windleitkörper lösbar an der Fahrzeugkarosserie festgelegt, wobei die Windleitkörper dann bei Bedarf individuell in Einsatz zu bringen sind.

Die Windleitkörper sind durch ihre kompakte Form bei Nichtgebrauch einfach im Fahrzeugkofferraum zu verstauen. Bei gebräuchlichen Windschottrahmen, die über die ganze Fahrzeugbreite reichen, wäre unter Umständen aufgrund dieser Breite ein Verstauungsproblem vorhanden. Außerdem verleihen die Windleitkörper dem Fahrzeug, trotz ihrer für die Luftführung großen Höhe der vorne aufragenden Fläche, einen sportlichen Charakter.

Der Hohlraum des Windleitkörpers läßt es zu, einen einem jeden Fahrzeugsitz zugeordneten Überrollbügel in sich aufzunehmen, so daß jeder Windleitkörper eine ausreichende Fläche zur Festlegung auf der Fahrzeugkarosserie vorfindet, und der Windleitkörper zudem am Überrollbügel verriegelt werden kann. Auch ein vorgesehenes Untergreifen des Heckdeckels durch eine Lasche am Windleitkörper, wodurch dieser bei geschlossenem Heckdeckel arretiert festliegt, hält den Windleitkörper ohne zusätzlichen Aufwand sicher an der Fahrzeugkarosserie.

Zusätzlich kann zwischen den beiden den Kopfstützen zugeordneten Windleitkörpern ein Windschottnetz aufgespannt und an diesen festgelegt sein, wodurch der Fahrgastraum über die gesamte Breite gegen Zugluft von hinten abgeschottet ist.

Um die Abschirmung des Insassen vor Zugluft durch den Windleitkörper zu verstärken, kann der Windleitkörper derart ausgestaltet werden, daß dessen vorderer Rahmen nach vorne, in derselben Form teleskopartig ausziehbar ist. Des weiteren kann hier eine ausziehbare, flache Platte als Sonnenschutz vorgesehen werden.

Eine weitere mögliche Ausgestaltung sieht im Hohlraum des Windleitkörpers einen Stauraum vor, dessen Öffnung durch eine aufschwenkbare Abdeckung verschlossen wird. Dieser Stauraum kann auch für die Unterbringung von Soundsystemen Verwendung finden.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1: in einer Perspektive von vorne zwei hinter einem Cabrioletsitz angeordnete Windleitkörper,
- Fig. 2: dieselben Windleitkörper von schräg hinten betrachtet in einer Teilansicht eines Cabriolets, und
- Fig. 3: ein Windleitkörper von der Seite gesehen, mit einem ausklappbaren Abschnitt.

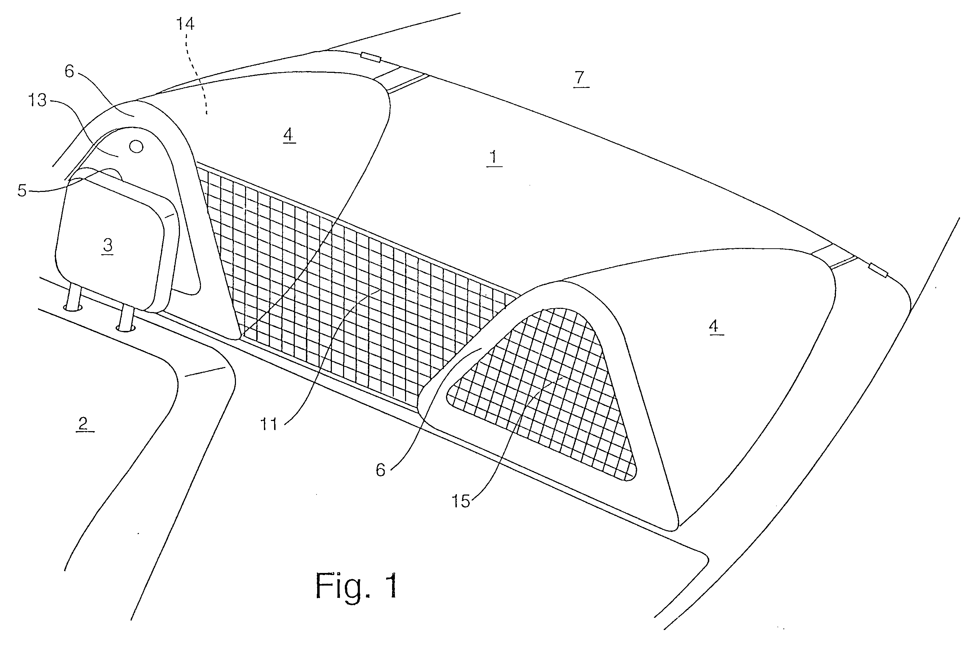

Die Figuren zeigen ausschnittsweise ein zweisitziges Cabriolet, auf dessen Fahrzeugkarosserie 1 (Heckoberseite) jeweils hinter dem Sitz 2 auf Höhe der Kopfstütze 3 ein Windleitkörper 4 aufgesetzt und festgelegt ist. (In der Fig. 1 wurde einer der Sitze nicht dargestellt).

Der Windleitkörper 4 ist als ein sich nach vorne im Umfang mit einer parabelförmigen Außenkontur erweiternder Hohlkörper ausgebildet. So führt der Windleitkörper 4 den Luftstrom von einer hinteren Spitze aus, sich seitlich und in die Höhe erweiternd, bis zu der Abrißkante an einer vorneliegenden, senkrecht aufragenden Fläche 6. Der Windleitkörper 4 ragt hier von der Heckoberseite 1 bis annähernd auf Höhe der Kopfstützenoberkante 5 hoch, wobei der Umfang der Kopfstütze 3 innerhalb der Umströmung der vorne aufragenden Fläche 6 des Windleitkörpers 4 liegt. Jeder Windleitkörper 4 lenkt damit die von hinten ankommende Luftströmung über den Sitzplatz des Fahrzeuges hinweg, wodurch ein Insasse nicht durch diese Luftströmung gestört ist.

Die lösbar arretierten Windleitkörper 4 können bei Bedarf von der Heckoberseite 1 entfernt werden, wenn z.B. das hier nicht dargestellte, unter einem Heckdeckel 7 verstaute Dach in seine abdeckende Lage verschoben werden soll. Hiernach können die zwei Windleitkörper 4, die durch die Zweiteiligkeit relativ wenig Stauraum benötigen, im Raum unter dem Heckdeckel 7 Platz finden.

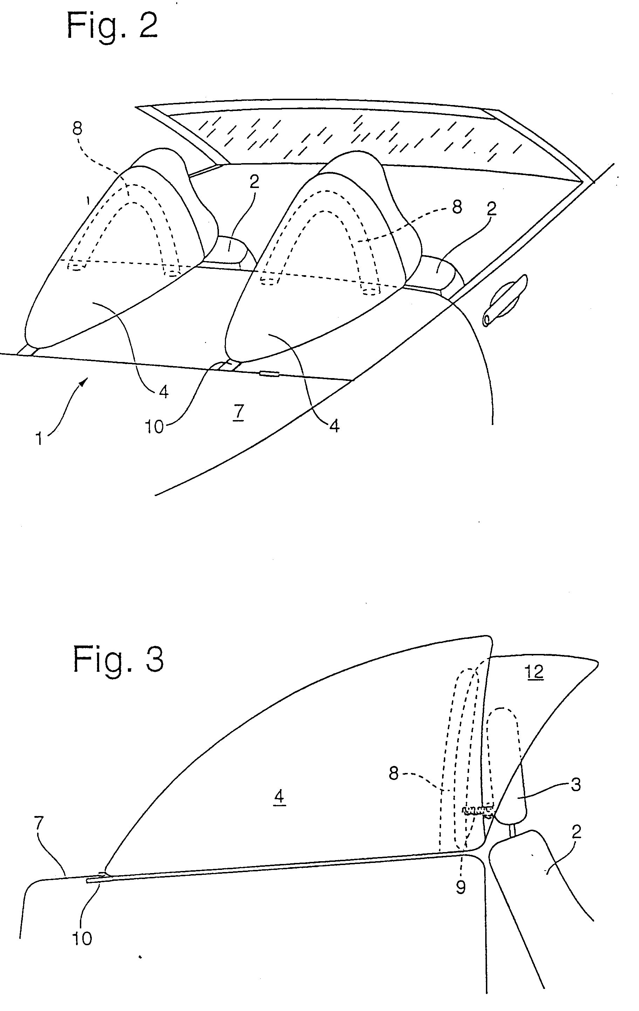

Der Hohlraum des Windleitkörpers 4 überdeckt, wie in den Figuren 2 und 3 eingezeichnet, einen hinter dem Sitz 2 hochragenden Überrollbügel 8, so daß der Windleitkörper 4 dicht an die Kopfstütze 3 herangeführt werden kann. Zudem kann der Überrollbügel 8 mittels einer Verriegelung 9 am Windleitkörper 4 auch zu einer vorderen Arretierung des Windleitkörpers 4 dienen. Nach hinten ist für die Arretierung des Windleitkörpers 4 der Heckdeckel 7 herangezogen, der mittels einer Lasche 10 am Windleitkörper 4 untergriffen wird, so daß der Windleitkörper 4 hierdurch bei geschlossenem Heckdeckel 7 festliegt.

Um die gesamte Innenraumbreite vor Zugluft zu schützen, ist zwischen den beiden Windleitkörpern 4 ein Windschottnetz 11 aufgespannt und mit geläufigen Mitteln, wie Druckknöpfen o.ä., befestigt (Fig. 1).

In einer weiteren, in Fig. 2 gezeigten Ausführung, ist der Windleitkörper 4 im vorderen Bereich teleskopartig ausziehbar, wodurch die Abschirmung gegen den Luftstrom vom Insassen einstellbar ist.

Wie die Fig. 3 zeigt, kann vorne am Windleitkörper 4 auch ein plattenförmiger Sonnenschutz 12 herausgeschwenkt werden, der z.B. aus getöntem Kunststoff gefertigt ist, welcher den Insassen vor einer störenden Sonneneinstrahlung von oben bewahrt. Dieser Sonnenschutz 12 kann entsprechend Fig. 2 auch die Außenkontur des Windleitkörpers 4 fortsetzen.

In weiteren Ausbildungsmöglichkeiten wird der Hohlraum des Windleitkörpers 4 als, durch eine zu öffnende Abdeckung 13 hindurch zugänglicher Stauraum 14 oder als Lautsprecherbox 15 genutzt.

## Patentansprüche

1. Windleitkörper (4) für ein zweisitziges Cabriolet, der sich jeweils hinter einer Kopfstütze (3) eines Fahrzeugsitzes (2) auf der Heckoberseite aufliegend in Form einer nach hinten auslaufenden, hinsichtlich der Außenkontur etwa parabelförmigen Haube in der Höhe bis annähernd auf Höhe der Kopfstützenoberkante (5) erstreckt, wobei die Kontur der Kopfstütze (3) innerhalb der Umströmung der vorne aufragenden Fläche des zugeordneten Windleitkörpers (4) liegt,
**dadurch gekennzeichnet,**
daß der haubenförmig aufragende Windleitkörper (4) mittels Arretiermitteln (9, 10) an der Fahrzeugkarosserie (1) festlegbar und bei Bedarf nach dem Lösen der Arretiermittel (9, 10) von dieser entfernbar ist.

2. Windleitkörper nach Anspruch 1,
**dadurch gekennzeichnet,**
daß der Windleitkörper (4) einen hinter dem Sitz (2) angeordneten Überrollbügel (8) überdeckt.

3. Windleitkörper nach Anspruch 1,
**dadurch gekennzeichnet,**
daß der Windleitkörper (4) an einem Überrollbügel (8) festlegbar ist.

4. Windleitkörper nach Anspruch 1,
**dadurch gekennzeichnet,**
daß der Windleitkörper (4) an seinem nach hinten auslaufenden Ende durch Untergreifen eines Fahrzeugheckdeckels (7) befestigbar ist.

5. Windleitkörper nach Anspruch 1,
**dadurch gekennzeichnet,**
daß zwischen zwei den beiden Kopfstützen (3) zugeordneten Windleitkörpern (4) ein Windschottnetz (11) aufgespannt und an diesen festlegbar ist.

6. Windleitkörper nach Anspruch 1,
**dadurch gekennzeichnet,**
daß der Windleitkörper (4) in Richtung der Kopfstützen (3) teleskopartig ausziehbar ist.

7. Windleitkörper nach Anspruch 1,
**dadurch gekennzeichnet,**
daß der Windleitkörper (4) einen aus einer verdeckten Ruhelage ausziehbaren Sonnenschutz (12) aufnimmt.

8. Windleitkörper nach Anspruch 7,
**dadurch gekennzeichnet,**
daß durch den Sonnenschutz (12) die Außenkontur des Windleitkörpers (4) fortgesetzt ist.

9. Windleitkörper nach Anspruch 1,
**dadurch gekennzeichnet,**
daß der Hohlraum des Windleitkörpers (4) einen Stauraum (14) bildet.

10. Windleitkörper nach Anspruch 1,
**dadurch gekennzeichnet,**
daß der Hohlraum des Windleitkörpers (4) als Lautsprecherbox (15) genutzt ist.

## Claims

1. Wind cowl (**4**) for a two-seater convertible, in each case positioned behind the headrest (**3**) of a vehicle seat (**2**) on the top side of the rear body and extending towards the back as a hood whose outer contour is of approximately parabolic shape with maximum height approximately level with the upper edge (**5**) of the headrest, such that the contour of the headrest (**3**) lies within the airflow envelope of the front surface of the associated wind cowl (**4**),
**characterized in that**
the hood-shaped raised wind cowl (**4**) can be attached to the vehicle body (**1**) by means of fixing devices (**9**, **10**) and can if necessary be removed therefrom by releasing the said fixing devices (**9**, **10**).

2. Wind cowl according to Claim 1,
**characterized in that**
the wind cowl (**4**) covers a roll-over protection arch (**8**) located behind each seat (**2**).

3. Wind cowl according to Claim 1,
**characterized in that**
the wind cowl (**4**) can be attached to a roll-over protection arch (**8**).

4. Wind cowl according to Claim 1,
**characterized in that**
at its back end the wind cowl (**4**) can be secured by being pushed underneath a vehicle rear lid (**7**).

5. Wind cowl according to Claim 1,
**characterized in that**
between the two wind cowls (**4**) associated with their respective headrests (**3**) is extended a wind-break net (**11**) which can be attached to the wind cowls.

6. Wind cowl according to Claim 1,
**characterized in that**
in the direction of the headrests (**3**) the wind cowl (**4**) can be pulled out telescopically.

7. Wind cowl according to Claim 1,
**characterized in that**
the wing cowl (**4**) comprises a sunshield (**12**) which can be pulled out from a covered rest position.

8. Wind cowl according to Claim 7,
**characterized in that**
the sunshield (**12**) is a continuation of the outer contour of the wind cowl (**4**).

9. Wind cowl according to Claim 1,
**characterized in that**
the hollow volume inside the wind cowl (**4**) forms a storage space (**14**).

10. Wind cowl according to Claim 1,
**characterized in that**
the hollow volume inside the wind cowl (**4**) is used as a loudspeaker box (**15**).

## Revendications

1. Déflecteur de vent (4) pour un cabriolet deux places, qui s'étend derrière un appui-tête (3) de chaque siège de véhicule (2) en reposant sur le côté supérieur de l'arrière de carrosserie et se présente sous la forme d'une calotte se rétrécissant vers l'arrière et sensiblement de forme parabolique quant à son contour extérieur, le déflecteur s'étendant en hauteur approximativement jusqu'au niveau du bord supérieur (5) de l'appui-tête, et le contour de l'appui-tête (3) se situant à l'intérieur de l'écoulement périphérique autour de la surface du déflecteur de vent (4), qui s'élève vers l'avant,
**caractérisé** en ce que le déflecteur de vent (4) s'élevant vers l'avant en forme de calotte, peut être fixé à l'aide de moyens d'arrêt (9, 10) à la carrosserie de véhicule (1), et peut, en cas de besoin, être retiré de celle-ci, après déblocage des moyens d'arrêt (9, 10).

2. Déflecteur de vent selon la revendication 1, **caractérisé** en ce que le déflecteur de vent (4) recouvre un arceau de sécurité (8) disposé derrière le siège (2).

3. Déflecteur de vent selon la revendication 1, **caractérisé** en ce que le déflecteur de vent (4) peut être fixé à un arceau de sécurité (8).

4. Déflecteur de vent selon la revendication 1, **caractérisé** en ce que le déflecteur de vent (4) peut être fixé à son extrémité se rétrécissant vers l'arrière, en s'engageant sous un capot arrière (7) du véhicule.

5. Déflecteur de vent selon la revendication 1, **caractérisé** en ce qu'un filet de cloisonnement au vent (11) est tendu entre deux déflecteurs de vent (4) associés aux deux appuis-tête (3), et peut y être fixé.

6. Déflecteur de vent selon la revendication 1, **caractérisé** en ce que le déflecteur de vent (4) est extensible de manière télescopique en direction des appuis-tête (3).

7. Déflecteur de vent selon la revendication 1, **caractérisé** en ce que le déflecteur de vent (4) reçoit un pare-soleil (12) extractible à partir d'une position de repos escamotée.

8. Déflecteur de vent selon la revendication 7, **caractérise** en ce que le pare-soleil (12) prolonge le contour extérieur du déflecteur de vent (4).

9. Déflecteur de vent selon la revendication 1, **caractérisé** en ce que l'espace intérieur creux du déflecteur de vent (4) forme un espace de rangement (14).

10. Déflecteur de vent selon la revendication 1, **caractérisé** en ce que l'espace intérieur creux du déflecteur ce vent (4) est utilisé en tant qu'enceinte de haut-parleur (15).
